# EUROPEAN PATENT SPECIFICATION

(11) **EP 4 222 032 B1**
(45) Date of publication and mention of the grant of the patent: **26.06.2024**
(21) Application number: 20789513.7
(22) Date of filing: 02.10.2020
(51) Int. Cl.: B60T 13/38, B60T 15/04, B60T 7/08

(54) **HAND BRAKE VALVE, PNEUMATIC BRAKE SYSTEM, VEHICLE, METHOD OF ASSEMBLING A HAND BRAKE VALVE**
HANDBREMSVENTIL, PNEUMATISCHE BREMSANLAGE, FAHRZEUG, VERFAHREN ZUM ZUSAMMENBAU EINES HANDBREMSVENTILS
SOUPAPE DE FREIN À MAIN, SYSTÈME DE FREINAGE PNEUMATIQUE, VÉHICULE, MÉTHODE DE MONTAGE D'UNE SOUPAPE DE FREIN À MAIN

(43) Date of publication of application: 09.08.2023
(73) Proprietor: ZF CV Systems Europe BV, 1170 Brüssel (BE)
(72) Inventor: RIEDIGER-JANISCH, Karl-Heinz, 30455 Hannover (DE); SWIATEK, Pawel, 54-616 Wroclaw (PL); ZABIEGLO, Wojciech, 58-500 Jelenia Gora (PL); KARUPPANAN, Muthumanickam, Chennai, 60053 (IN); NAGALINGAM, Prabhakar, Chennai 600058 (IN); THIYAGARAJAN, Sundaramoorthy, Chennai, 600058 (IN)
(74) Representative: Ohlendorf, Henrike
(86) International application number: PCT/EP2020/077633
(87) International publication number: WO 2022/069057

(56) References cited:
- DE-A1- 2 613 663
- GB-A- 1 037 220
- JP-U- S5 565 258
- US-A- 2 656 016
- US-A- 3 109 456

## Description

The invention relates to a hand brake valve for actuating a parking brake and/or an auxiliary brake of a vehicle, in particular a commercial vehicle, comprising: a valve cartridge comprising a cartridge locking feature, wherein the valve cartridge is adapted to accommodate a valve piston arrangement with a valve piston and a valve seat element, wherein the valve seat element is movable in an axial movement along a valve axis against a valve stop of the valve cartridge.

Hand brake valves are generally well known. A hand brake valve of the known kind is usually used together with one or more spring brake actuators for auxiliary and parking braking systems. A valve piston of the hand brake valve is actuated by a cam connected to a hand lever, wherein the actuation results in an evacuation of the spring compression chambers of at least one spring brake actuator. This in turn results in an expansion of a parking brake spring of the spring brake actuator, which leads to a braking of the vehicle.

Hand brake valves can still be improved with respect to their suitability for assembly and repair. Also, it is generally desirable to allow for an economic construction and manufacturing of hand brake valves.

It is therefore desirable to address at least one of the above problems. There is room for improving conventional hand brake valves with respect to their assembly and repair as well as their construction and manufacturing.

On a different note and unrelated to the above, a patent publication US2656016A discloses an auxiliary control valve for busses, more particularly to valves especially designed for busses for use to avoid secondary accidents.

GB1037220A discloses a safety brake mechanism for a tractor-trailer braking system, wherein the safety brake mechanism comprises a control valve operated by manual means between a first position communicating an inlet port thereof connected to said second source, with an outlet port thereof connected to said brake release means, while disrupting communication between said outlet port and an exhaust port thereof connected to atmosphere, and a second position disrupting communication between said inlet and outlet ports while communicating the latter with said exhaust port.

JPS5565258U discloses a brake device for a tractor to operate the tractor and a trailer service brake at the same time by operating the tractor brake so that only the tractor or the trailer or both tractor and trailer parking brake devices are activated by a tractor parking control device.

US3109456A discloses a fluid pressure control valve comprising a housing, a fluid pressure inlet in said housing, a fluid pressure outlet in said housing, a fixed valve seat between said inlet and said outlet, and a valve face member yieldingly urged toward said fixed seat.

In accordance with a first aspect of the invention, a hand brake valve is proposed according to claim 1.

A hand brake valve is proposed for actuating a parking brake and/or an auxiliary brake of a vehicle, in particular a commercial vehicle, comprising: a valve cartridge comprising a cartridge locking feature, wherein the valve cartridge is adapted to accommodate a valve piston arrangement with a valve piston and a valve seat element, wherein the valve seat element is movable in an axial movement along a valve axis against a valve stop of the valve cartridge.

In accordance with the invention, the hand brake valve comprises a valve guide element with a guide body, in particular an annular guide body, adapted to limit the axial movement of the valve seat element, wherein the valve guide element comprises at least one guide locking feature, adapted to create a positive lock with the cartridge locking feature, wherein the positive lock is established by a locking movement of the valve guide element into a locked position, and the hand brake valve comprises at least one snap lock element, adapted to secure the valve guide element in the locked position.

The invention is based on the finding that - despite the requirement that a valve piston arrangement may have to be mounted reliably in a valve cartridge and/or valve casing - it is desirable to allow for a relatively easy assembly and disassembly of said valve piston arrangement. Certain conventional hand brake valves may rely on threaded fixation elements which are relatively large and thus heavy and are often times - due to their geometry - limited to a certain type of valve. Moreover, due to a relatively long axial way of inserting such a fixation element into a valve cartridge and/or casing particularly by screwing down the thread, assembly and disassembly of the valve during manufacture or repair requires relatively great effort and long time. Other solutions for fixing the valve piston arrangement such as a combination of washers and a circlip or lock ring also require relatively high effort and time to assemble.

By applying a valve guide element with an annular guide body that comprises at least one guide locking feature, the valve guide element can be reliably fixed to the valve cartridge, allowing for an effective limiting of the axial movement of the valve seat element. Through the guide locking feature, a positive lock between the valve guide element and the valve cartridge can be established. By a locking movement of the valve guide element into a locked position, the at least one guide locking feature each engages with one corresponding cartridge locking feature, resulting in a positive lock, inhibiting any axial movement of the valve guide element. In contrast to a threaded fixation element, which may have to be rotated in several turns, the locking movement of the valve guide element is relatively short, for example a rotational movement around only 60°, and thus requires less time and effort. By means of the snap lock element, which engages in the locked position of the valve guide element, the positive lock can be reliably secured. Furthermore, due to the snap lock element, the positive lock is re-releasable.

Furthermore, the valve guide element of the proposed kind can be adapted relatively easy to different valve and/or cartridge geometries, since it comprises relatively simple mechanical interfaces in the form of guide locking features and cartridge locking features.

According to a second aspect of the invention, a pneumatic brake system for a vehicle is proposed, comprising a parking brake and/or an auxiliary brake, at least one spring brake actuator, and a hand brake valve according to the first aspect of the invention.

According to a third aspect of the invention, a vehicle, in particular a commercial vehicle, is proposed comprising a pneumatic brake system according to the second aspect of the invention.

According to a fourth aspect of the invention, a method of assembling a hand brake valve according to the first aspect of the invention is proposed, comprising the steps:
- inserting a valve guide element into a valve cartridge in an insertion movement,
- establishing of a positive locking in a locking movement between a guide locking feature of the valve guide element and a cartridge locking feature of the valve cartridge,
- securing the positive locking through engaging a snap lock element in a locked position of the valve guide element.

A further embodiment of the method further comprises the steps:
- releasing of the securing of the positive locking through a disengaging movement of the snap lock element,
- releasing of the positive locking through a releasing movement of the valve guide element contrary to the locking movement,
- extracting of the valve guide element through an extracting movement of the valve guide element contrary to the insertion movement.

The pneumatic brake system according to the second aspect of the invention, the vehicle according to the third aspect of the invention and the method of assembling a hand brake valve according to the fourth aspect of the invention particularly benefit from the advantages of the hand brake valve according to the first aspect of the invention. In particular, the method of assembling a hand brake valve is improved due to the characteristic features of the hand brake valve according to the first aspect of the invention.

Further embodiments of the invention can be found in the dependent claims that show particularly advantageous possibilities to realize the above described concept(s) in light of the object of the invention.

An embodiment suggests that the valve guide element comprises three guide locking features. The amount of the three guide locking features, which in particular are arranged at an equal distance to each other along and/or about the circumference of the valve guide element, provides sufficient mechanical stability, while still allowing for a low part complexity and thus, result in relatively low manufacturing costs.

In accordance with a further embodiment, it is proposed that the valve guide element comprises the at least one snap lock element. In particular, the at least one snap lock element is part of the valve guide element. In said embodiment, the complexity of the valve cartridge can be kept low, since the one or more snap lock elements are a part of the valve guide element.

In particular, the snap lock element is attached to the guide locking feature. In particular, the snap lock element extends from the guide locking feature in a tangential direction, in particular such that a snap leg is attached to the guide locking feature and, on the opposite side of the snap leg, a snap hook is attached to the snap leg. In particular, all guide locking features each have one snap lock element attached.

In alternative embodiments, the valve cartridge comprises the at least one snap lock element. In said embodiment, the complexity of the valve guide element can be kept low, since the one or more snap lock elements are part of the valve cartridge.

An embodiment suggests that the snap lock element comprises a snap leg and a snap hook, wherein the snap leg is elastically deformable, in particular to allow for a displacement of the snap hook during the locking movement. Such snap lock element comprising a snap leg and a snap hook is a simple and effective means of realizing a snap lock for securing the valve guide element in its locked position.

In particular, the locking movement is a rotational movement around the valve axis. A rotational movement as a locking movement is particularly advantageous for a circular valve and/or cartridge geometry, in which the major components are rotationally symmetric.

In a further embodiment, the guide locking feature is a protrusion, in particular a rectangular rib, extending radially from the annular guide body. Such a protrusion provides sufficient stability for fixing the valve guide element and further can be manufactured by known methods such as injection molding.

In accordance with a further embodiment, it is proposed that the cartridge locking feature comprises a cartridge protrusion extending radially from an inner cartridge wall into an inner cartridge space of the valve cartridge. Such cartridge protrusion is adapted to engage with the snap lock element and/or guide locking feature of the valve guide element. Cartridge protrusions can be manufactured by known methods such as injection molding.

In embodiments, one or more cartridge locking features, in particular cartridge protrusions, can further be comprised of a cartridge locking shoulder. The cartridge locking shoulder is a further radial extension inwards the inner cartridge space of the valve cartridge. A cartridge locking shoulder is particularly located at a bottom end of the cartridge locking feature. A cartridge locking shoulder advantageously increases the area of contact of the guide locking feature and/or the snap lock element with the cartridge locking feature and therefore increases the stability of the positive locking.

In accordance with a further embodiment, it is proposed that the guide locking feature or the cartridge locking feature comprises
- a tangential stop portion adapted to lock the locking movement by contacting the cartridge locking feature, and
- an axial holding portion adapted to fill in an axial gap of the cartridge locking feature and to lock a movement of the valve guide element in the direction of the valve axis.

The axial holding portion ensures a stable positive locking and thus a reliable fixation of the valve guide element in the cartridge, whereas the tangential stop portion ensures that the locking movement is stopped once the locked position of the valve guide element is reached.

In a further embodiment, the axial holding portion and/or the tangential stop portion comprises a ramp section. The ramp section improves the usability of the valve guide element, since the locking movement, in particular the entering of the axial holding portion into the axial gap, is facilitated. Furthermore, a ramp section advantageously leads to a gradual buildup of the positive locking during the locking movement.

An embodiment suggests that an outer valve guide diameter of the valve guide element is equal to or slightly smaller than a cartridge space diameter of the valve cartridge, in particular that a clearance fit is established between the valve guide element and the valve cartridge. For a definition of the clearance fit, it is referred to the ISO norms, in particular ISO 286. A suitable clearance fit should allow enough clearance for an insertion movement and/or locking movement of the valve guide element on the one hand, but on the other hand should limit the radial clearance to allow for a reliable fixation of the valve guide element and consequently, for a precise guiding of the valve seat element.

An embodiment suggests that the valve guide element is adapted to be held in the valve cartridge in its locked position without any radial clearance, in particular that all guide locking features contact an inner cartridge wall of the valve cartridge.

In a further embodiment, the valve guide element comprises at least one radial ramp section. In particular, the radial ramp section is adapted to engage with a corresponding radial fixation feature of the valve cartridge during the locking movement by contacting said radial fixation feature and pressing against it, in particular when the valve guide element is in its locked position.

An embodiment suggests that the valve guide element further comprises at least one spacer protrusion extending from the annular guide body defining a guide core diameter. Alternatively or additionally, the valve guide element further can comprise an annular web. Such spacer protrusions and/or an annular web can increase the stability of the valve guide element and further define on its outer circumferential boundary a guide core diameter. For the valve cartridge, a further, inner cartridge diameter can be defined by the inner radial boundaries of the cartridge locking features and/or the cartridge locking shoulders. The guide core diameter and the inner cartridge diameter together can establish a clearance fit, such that the valve guide element can be moved, in particular rotated, when inserted into the valve cartridge. The spacer protrusions and/or the annular web therefore allow for guidance of the insertion movement and/or the locking movement of the valve guide element.

In a further embodiment, the valve guide element is comprised of a thermoplastic material, in particular polyamide or glass-filled polyamide. Thermoplastic materials, and in particular polyamide, are a preferred material for the valve guide element, in particular for the snap lock element, because they are relatively cheap, lightweight and feature the desired mechanical properties such as strength, rigidity, creep strength and dimensional stability, while still allowing for an elastic behavior.

Glass filled polyamide further features a reinforcement with the glass fibers, which further improves the mechanical characteristics of the valve guide element.

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter which show in:
- Fig. 1: an excerpt of a hand brake valve 100 according to the concept of the invention in a cross-sectional illustration,
- Fig. 2: a valve guide element 140 with three guide locking features 142,
- Fig. 3: a valve guide element 140 mounted in its locked position LOP in a valve cartridge 120 from a top view,
- Fig. 4A: a valve cartridge 120 with a valve guide element 140 from a side section view,
- Fig. 4B: a valve cartridge 120 from a side section view,
- Fig. 5A-D: schematic illustrations of different stages during the inserting and locking of a valve guide element 140, shown in a tangential drawing plane XX, wherein the drawing plane XX is indicated in Fig. 2,
- Fig. 6: a schematic illustration of a further embodiment, in which the cartridge locking feature 126' comprises the snap lock element 142',
- Fig. 7A: a schematic illustration of a further embodiment with a ramp section 164,
- Fig. 7B: a schematic illustration of a further embodiment of a valve guide element with a radial ramp section 166, and in
- Fig. 8: a vehicle 1000 in the form of a commercial vehicle 1002, comprising a pneumatic brake system 600 with a hand brake valve 100 according to the concept of the invention.

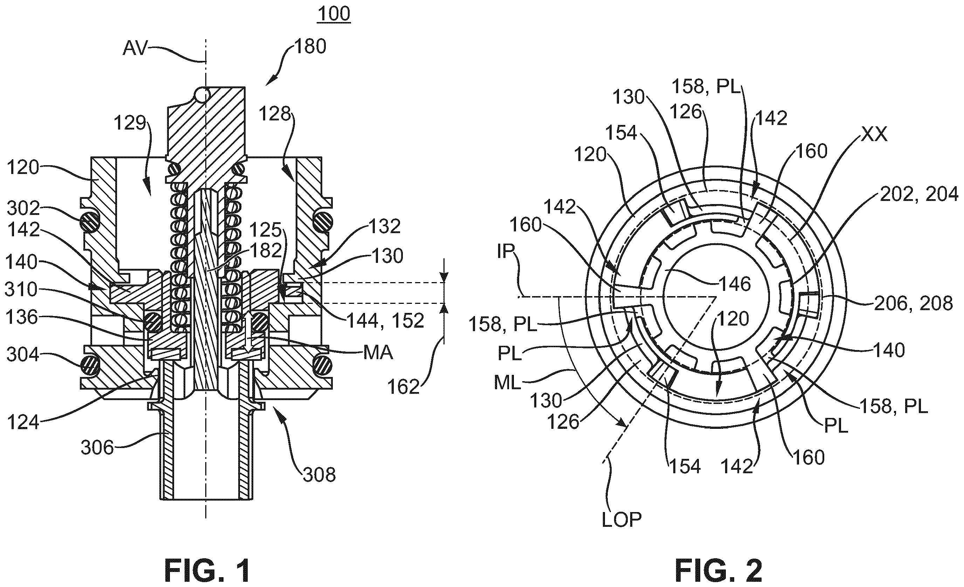

Fig. 1 shows an excerpt of a hand brake valve 100 according to the concept of the invention in a cross-sectional illustration. A valve cartridge 120 is shown which comprises an upper cartridge sealing 302 and a lower cartridge sealing 304, each located on the outer circumference of the valve cartridge 120. The valve cartridge 120 is comprised of principally hollow cylindrical sections and adapted to accommodate a valve piston arrangement 180 in an inner cartridge space 129. The valve piston arrangement 180 comprises a valve piston 182 and a valve seat element 136, wherein both are movable relative to each other an axial direction, that is in the direction of a valve axis AV. The valve piston arrangement 180 further comprises an outlet tube 306, which extends through a cartridge orifice 308 at the lower end face of the valve cartridge 120. In particular, the valve seat element 136 is axially movable with respect to the valve cartridge 120. The components of the valve piston arrangement 180 are principally arranged coaxially with respect to the valve axis AV. In addition to limiting the axial movement MA of the valve seat element 136, the valve guide element 140 acts as a guide for the axial movement MA of the valve seat element 136. The valve guide element 140 comprises an annular guide body 146 with a cylindrical guide hole 149, whose inner diameter corresponds to, in particular is slightly greater than, the outer diameter of the contacting part of the valve seat element 136, to allow for a guided relative axial movement MA of the valve seat element 136.

During the mounted state of the valve guide element 140, when the valve guide element 140 is in its locked position LOP, the axial movement MA of the valve seat element 136 is limited by the valve guide element 140 on a first side, and by a valve stop 124 on a second, opposite side. The valve stop 124 is of annular shape and radially extends into the cartridge orifice 308. Also, the axial movement MA of the valve seat element 136 can further be limited by the outlet tube 306, depending on the position of the valve piston 182. A valve seat sealing 310 is arranged in the annular gap between the valve cartridge 120 and the valve seat element 136 for pneumatically sealing said annular gap while still allowing for an axial movability of the valve seat element 136.

During assembly, the valve seat element 136 is inserted into the valve cartridge before the valve guide element 140 is inserted into the inner cartridge space 129 in an inserting movement IM along the valve axis AV, before an insertion position IP is reached at a cartridge bottom 125 of the valve cartridge 120.

Fig. 2 shows the valve guide element 140 from a top view after it has been moved from its insertion position IP in a locking movement ML into a locked position LOP. The valve guide element 140 comprises three guide locking features 142, wherein each guide locking feature 142 comprises a snap lock element 144. Accordingly, the valve cartridge 120 comprises three corresponding cartridge locking features 126. According to the concept of the invention, both locking features 142, 126 are adapted to engage with each other to form a positive locking PL in order to mount the valve piston arrangement 180 and in particular the valve seat element 136 (not shown here). Here, the locking movement ML is a rotational movement MR around the valve axis AV by about 60°. In said locked position LOP, each snap lock element 144 is engaged with its corresponding cartridge locking element 126, by snapping in, that is reaching - in a tangential direction - behind the cartridge locking element 126.

Through such locking engagement of the snap lock elements 144, the valve guide element 140 is secured in its locked position LOP, preventing any unintentional rotational movement MR, which otherwise could be caused for example by force and/or pressure changes during operation of the hand brake valve.

The valve cartridge 120 of the shown embodiment comprises three cartridge locking features 126, were in each cartridge locking feature 126 is formed as a cartridge protrusion 127 extending from the inner cartridge wall 128 into the inner cartridge space 129. With regard to their axial extension, each cartridge locking feature 126 does not extend completely to the cartridge bottom 125, but ends in a distance to said cartridge bottom 125, at a bottom end 132 of the cartridge locking feature 126, so as to create an axial gap 162 between the cartridge bottom 125 and the cartridge locking feature 126. The axial gap 162 accommodates the valve guide element 140 in its locked position LOP, in particular the axial holding portion 158 of the guide locking feature and the snap leg 152.

In the shown embodiment, each cartridge locking feature 126 further comprises a cartridge locking shoulder 130, which is a further local extension of the cartridge locking feature 126 inner radial direction further into the inner cartridge space 129. The cartridge locking shoulder 130 is located at the bottom end 132 of the cartridge locking feature 126. The cartridge locking shoulders 130 in particular radially extend into the inner cartridge space 129 such that they together form an inner cartridge diameter 202, which is equal to or slightly larger than the guide core diameter 204, to allow for an insertion movement MI and/or a locking movement ML of the valve guide element 140. The cartridge locking shoulders 130 advantageously increase the radial area of contact with the axial holding portion 158 and thus increase the stability of the positive lock PL. The cartridge locking shoulders 130 further contribute to a reliable securing of the valve guide element 140 in its locked position LOP, since - due to the increased radial extension of the cartridge locking feature 126 via the cartridge locking shoulder 130 - it is less likely that the snap lock element 144 will be accidentally bent inwards, which would result in a release of the snap lock.

Each guide locking feature 142 comprises a tangential stop portion 160 and an adjacent axial holding portion 158. The axial holding portion 158 is adapted to fill in an axial gap 162 of the cartridge locking element 126, in particular between the cartridge locking element 126 and the cartridge bottom 125, so as to inhibit any axial movement of the valve guide element 140 and to form a positive locking PL in the locked position LOP.

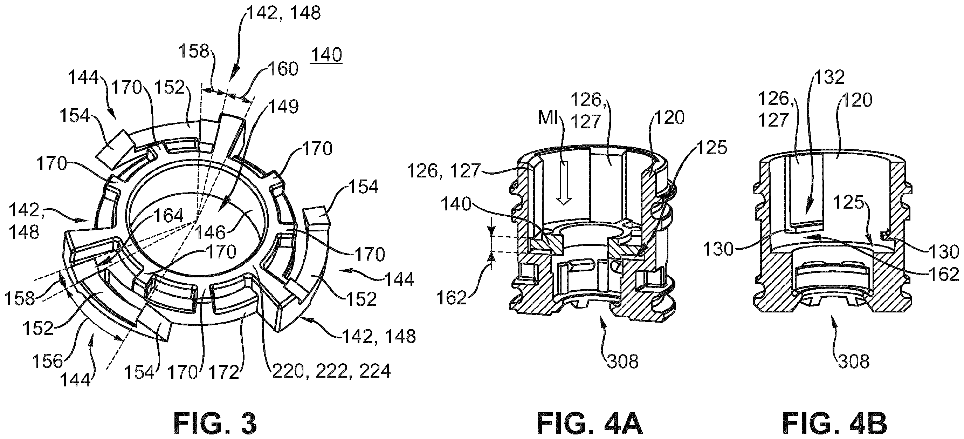

Fig. 3 shows a detailed perspective view of the valve guide element 140. The valve guide element 140 comprises an annular guide body 146 and three guide locking features 142 which are extending radially from the annular guide body 146. The guide locking features 142 are each arranged at an equal distance around the circumference of the annular guide body 146. Each guide locking feature 142 has a snap lock element 144 attached to it, wherein each snap lock element 144 comprises a snap leg 152 and a snap hook 154. The snap leg 152 extends from the guide locking feature 142 in a tangential direction, in particular in a in equal distance to the valve axis AV. The material properties of the snap leg 152 allow for an elastic deformability during the locking movement ML. During the locking movement ML the snap hook 154 is temporarily pushed down by the cartridge locking feature 126 before snapping back once the valve guide element 140 has reached its locked position LOP.

In other embodiments, the number of snap lock elements 144 is smaller than the number of guide locking features 142. For example, a valve guide element can comprise three guide locking features 142, but only one snap lock element 144, which is attached to one of the three guide locking features 142. One snap lock element 144 can be sufficient to secure the valve guide element 140 in its locked position LOP.

The valve guide element 140 can further comprise one or more spacer protrusions 170, for example a number of six spacer protrusions 170, wherein each spacer protrusion 170 extends radially from the annular guide body 146. Also, the valve guide element can further comprise an annular web 172, which also extends radially from the annular guide body 146, in particular around the complete circumference of the annular guide body 146. The spacer protrusions 170 as well as the annular web 172 define a guide core diameter 204. The spacer protrusions 170 advantageously increase the stability of the valve guide element 140, while saving weight.

Each guide locking feature 142 comprises a tangential stop portion 160 and an adjacent axial holding portion 158. The tangential stop portion 160 serves as a stop to limit the locking movement ML, in particular after the snap hook 154 has engaged with the cartridge locking feature 126 of the valve cartridge 120 (not shown). Therefore, the distance between the snap hook 154 and the tangential stop portion 160 is preferably equal to or slightly larger than the tangential extension of the cartridge locking feature 126.

The snap legs 152 shown in Fig. 3, which connect the snap hooks 154 to the guide locking features 142, are not visible in Fig. 2, as they are covered by the cartridge locking feature 126 and the cartridge locking shoulders 130.

Fig. 4A shows a sectional prospective view of the valve cartridge 120 together with a valve guide element 140 after its insertion movement MI. In the shown state, the valve guide element 140 has been moved down in an axial movement all the way to the cartridge bottom 125.

Figure 4B shows a further illustration of the valve cartridge 120 before insertion of the valve guide element 140. In contrast to figure for a, a cartridge locking shoulder is visible, as it is not covered by the valve guide element 140.

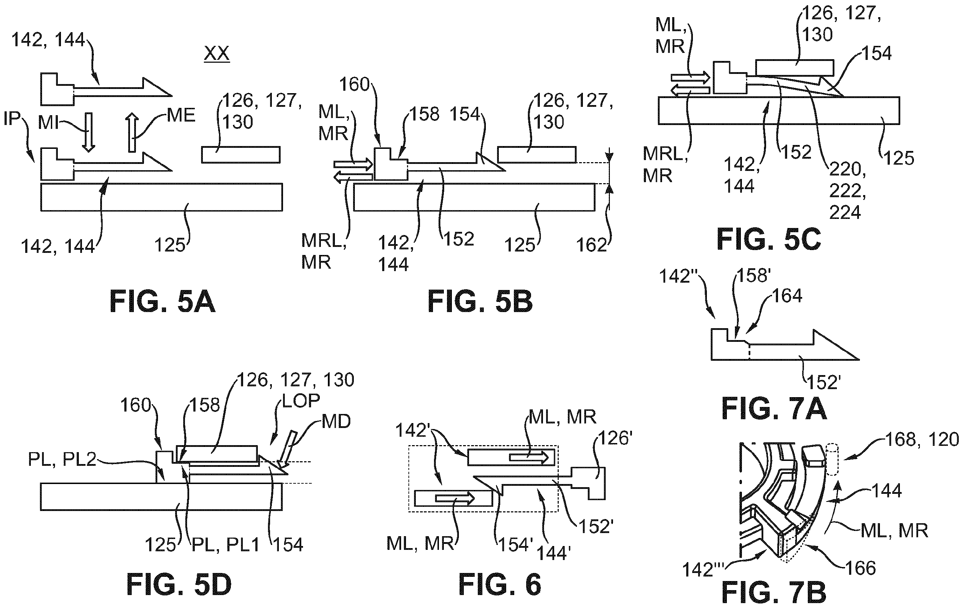

Figs. 5A, 5B, 5C, 5D each show in schematic illustrations different stages of the insertion and locking process of a valve guide element 140 in a drawing plane XX, wherein the drawing plane XX is indicated in Fig. 2.

In Fig. 5A, a guide locking feature 142 together with its attached snap lock element 144 is shown in detail, while the valve guide element 140 (which is not shown here in its entirety) is moved down to the cartridge bottom 125 in an insertion movement MI to its insertion position IP.

In Fig. 5B, the valve guide element 140 is moved in a locking movement ML, which here is a rotational movement MR. In said locking movement ML, each guide locking feature 142 is moved towards its corresponding cartridge locking feature 126.

In Fig. 5C, the locking movement ML is further progressed, so that the snap hook 154 along with a major part of the snap leg 152 has entered the axial gap 162. The axial gap 162 is formed between the cartridge locking element 126 (in optional embodiments together with a cartridge locking shoulder 130) on the upper side and the cartridge bottom 125 on the lower side.

In preferred embodiments, the snap leg 152, or the snap hook element 144, or the complete valve guide element 140, is comprised of a technical thermoplastic material 220, for example a polyamide 222, such as a glass-filled polyamide 224. Due to the according material characteristics, the snap leg 152 is adapted to elastically deform during the locking movement ML in order for the snap hook 152 to fit through the axial gap 162, before regaining its original shape once the valve guide element 140 has reached its locked position LOP, as shown in Fig. 5D.

Fig. 5D also shows the positive locking PL between the cartridge locking element 126 (and/or the cartridge locking shoulder 130) and the axial holding portion 158 of the guide locking feature 142 as the positive locking component PL1, as well as between the axial holding portion 158 (and/or other parts of the integrally connected guide locking feature 142) and the cartridge bottom 125 as the second positive locking component PL2. The first positive locking component PL1 and the second positive locking component PL2 together form the positive locking PL. In other words, by locking the guide locking feature 142 with the cartridge locking feature 126 - in particular locking the guide locking feature 142 between the guide locking feature 126 and the cartridge bottom 125 - any axial movement of the valve guide element 140 is reliably inhibited. Even further, through the locking between the snap lock element 144 and the cartridge locking element 126, the valve guide element 140 is reliably secured in the locked position LOP, and consequently, also the positive locking PL is reliably secured.

For dissassembling the valve guide element 140, the above described steps can be executed principally in reversed order. First, the snap lock element 144 needs to be disengaged in a disengaging movement MD, in particular by pressing down the snap hook 154, as shown in Fig. 5D. Subsequently, the valve guide element 140 can be moved in a releasing movement MRL, which is contrary to the locking movement ML. Via the releasing movement MRL, which also is a rotational movement MR, the positive locking PL can be released, as shown in Figs. 5C and 5B. As the last substantial step of the disassembly of the valve guide element 140, the valve guide element 140 can be extracted from the valve cartridge 120 in an extraction movement ME, as shown in Fig. 5A.

Fig. 6 shows an alternative embodiment of the invention, in which the cartridge locking feature 126' comprises the snap lock element 144'. Consequently, when a guide locking feature 142', which consequently features no snap lock element, is moved in a locking movement ML towards the (stationary) cartridge locking element 126', a snap leg 152' elastically deforms and consequently snaps back after a positive locking PL is reached in a locked position LOP (not shown here). Also mixed forms of embodiments shown in Fig. 5 and Fig. 6 are possible within the scope of the invention; for example a rigid snap hook could be arranged on the cartridge locking element, wherein a snap leg or the like elastically deformable member is arranged on the guide locking feature. Also said order can be reversed, such that the cartridge locking element comprises a snap leg or the like elastic members are and the guide locking feature comprises a rigid snap hook.

Fig. 7A shows an optional embodiment of a guide locking feature 142" which is characterized in that the axial holding portion 158 comprises a ramp section 164. Such ramp section 164 can be applied in all shown embodiments. A ramp section 164 advantageously improves the insertion process, since it facilitates the sliding of the axial holding portion 158 into the axial gap 162. Additionally or alternatively, such ramp section 164 can also be arranged in other regions of the valve guide element 140, for example at the snap leg 152, in particular in an area of the snap leg 152 adjacent to the axial holding portion 158. A ramp section 164 further leads to an incremental build-up of the positive locking PL, as the axial gap 162 is gradually filled in by the axial holding portion 158 and/or the snap leg 152 during the locking movement ML.

Fig. 7B shows another embodiment of a valve guide element comprising a radial ramp section 166. Such radial ramp a section is integrally attached as an radial extension of the guide locking feature 142‴, whereas its radial thickness decreases in a tangential direction towards the snap lock element 144. A radial ramp section 166, in particular via gradually engaging with a corresponding radial fixation feature 168 during a locking movement ML, is adapted to gradually decrease the radial clearance between the valve guide element 140 and the valve cartridge 120 during the locking movement ML, to allow for a reliable fixation and a precise positioning of the valve guide element 140. In particular, through the gradual increase of the outer valve guide diameter, the clearance fit between valve guide element 140 and the valve cartridge 120 can be transformed into a press fit during the locking movement. This is because during the locking movement, each radial ramp section 166 of the valve guide element 140 is increasingly pressed against each radial fixation feature 168, firmly holding the valve guide element 140 in when the locked position LOP is reached. In particular, the radial fixation feature 168 can be arranged in the axial gap 162, in particular formed as a protrusion extending radially inwards into the axial gap 162, such that it fully engages with the radial ramp section 166 when the valve guide element 140 is in its locked position LOP. In other embodiments, the order of radial ramp section 166 and radial fixation feature 168 can be reversed, so that he radial ramp section is arranged on the side of the valve cartridge 120, and the radial fixation feature 168 is arranged on the valve guide element 140, in particular as an extension of the guide locking feature 142"'. In other embodiments, a first radial ramp section can be arranged on the side of the valve element, and a second radial ramp section can be arranged on the side of the valve cartridge, whereas both ramp sections have a decreasing thickness towards each other so as to engage with each other in a locking movement ML.

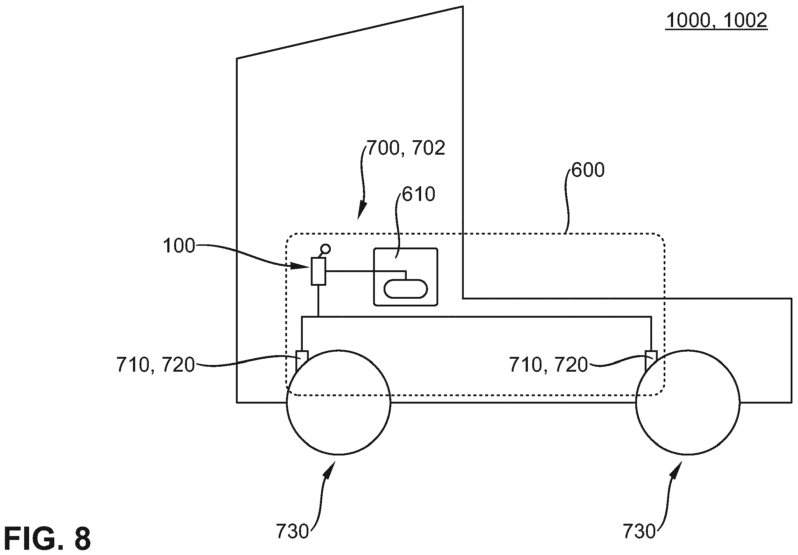

Fig. 8 shows a vehicle 1000 in the form of a commercial vehicle 1002, comprising a pneumatic brake system 600 with a hand brake valve 100 according to the concept of the invention. The vehicle 1000 comprises four wheels 730, two of which are shown in Fig. 8. A disc brake 720 is assigned to each wheel 800. Each disc brake 720 can be actuated by a spring break actuator 710.

The pneumatic braking system 600 comprises a parking brake 700 and/or an auxiliary brake 702 and a handbrake valve 100 according to the concept of the invention. Via the handbrake valve 100, the spring brake actuators 710 can be actuated in order to selectively engage or disengage the parking brake 700 and/or the auxiliary brake 702. The handbrake valve 100 is adapted to actuate the Spring break actuators 710 by providing pressurized air P from an air supply unit 610 to the spring brake actuators 710 or by evacuating spring compression chambers (not shown) of the spring brake actuators 710. Other components of the pneumatic brake system 600, such as a service brake circuit, are not shown in Fig. 8.

### List of reference signs (part of the description)

- 100: hand brake valve
- 120: valve cartridge
- 124: valve stop
- 125: cartridge bottom
- 126, 126': cartridge locking feature
- 127: cartridge protrusion
- 128: inner cartridge wall
- 129: inner cartridge space
- 130: cartridge locking shoulder
- 132: bottom end of the cartridge locking feature
- 136: valve seat element
- 140: valve guide element
- 142, 142', 142", 142‴: guide locking feature
- 144, 144': snap lock element
- 146: annular guide body
- 148: protrusion
- 149: guide hole
- 150: rectangular rib
- 152, 152': snap leg
- 154: snap hook
- 158: axial holding portion
- 160: tangential stop portion
- 162: axial gap between cartridge bottom and cartridge locking feature
- 164: ramp section
- 166: radial ramp section
- 168: radial fixation feature
- 170: spacer protrusion
- 172: annular web
- 180: valve piston arrangement
- 182: valve piston
- 202: inner cartridge diameter
- 204: guide core diameter
- 206: outer valve guide diameter
- 208: cartridge space diameter
- 220: technical thermoplastic material
- 222: polyamide
- 224: glass-filled polyamide
- 302: upper cartridge sealing
- 304: lower cartridge sealing
- 306: outlet tube
- 308: cartridge orifice
- 310: valve seat sealing
- 600: pneumatic brake system
- 610: air supply unit
- 700: parking brake
- 702: auxiliary brake
- 710: spring brake actuator

- 720: disc brake
- 730: wheel
- 1000: vehicle
- 1002: commercial vehicle

- AV: valve axis
- FC: clearance fit
- IP: insertion position
- LOP: locked position
- MA: axial movement
- MD: disengaging movement
- ME: extracting movement
- MI: insertion movement
- ML: locking movement
- MR: rotational movement
- MRL: releasing movement
- PL: positive lock
- XX: drawing plane

## Claims

1. Hand brake valve (100) for actuating a parking brake (700) and/or an auxiliary brake (702) of a vehicle (1000), in particular a commercial vehicle (1002), comprising:
- a valve cartridge (120) comprising a cartridge locking feature (126), wherein the valve cartridge (120) is adapted to accommodate a valve piston arrangement (180) with a valve piston (182) and a valve seat element (136), wherein
- the valve seat element (136) is movable in an axial movement (MA) along a valve axis (AV) against a valve stop (124) of the valve cartridge (120),
- a valve guide element (140) with a guide body (146), adapted to limit the axial movement (MA) of the valve seat element (136), wherein
- the valve guide element (140) comprises at least one guide locking feature (142), adapted to create a positive lock (PL) with the cartridge locking feature (126), wherein
- the positive lock (PL) is established by a locking movement (ML) of the valve guide element (140) into a locked position (LOP), and
**characterized in that**,
- the hand brake valve (100) comprises at least one snap lock element (144) adapted to secure the valve guide element (140) in the locked position (LOP).

2. Hand brake valve (100) according to claim 1, **characterized in that** the at least one snap lock element (144) is part of the valve guide element (140).

3. Hand brake valve (100) according to claim 1 or 2, **characterized in that** the snap lock element (144) comprises a snap leg (152) and a snap hook (154), wherein the snap leg (152) is elastically deformable, in particular to allow for a displacement of the snap hook (154) during the locking movement (ML).

4. Hand brake valve (100) according to one of the preceding claims, **characterized in that**
- the locking movement (ML) is a rotational movement (MR) around the valve axis (AV).

5. Hand brake valve (100) according to one of the preceding claims, **characterized in that** the guide locking feature (142) is a protrusion (148), in particular a rectangular rib (150), extending radially from the annular guide body (146).

6. Hand brake valve (100) according to one of the preceding claims, **characterized in that** the cartridge locking feature (126) comprises a cartridge protrusion (127) extending radially from an inner cartridge wall (128) into an inner cartridge space (129) of the valve cartridge (120).

7. Hand brake valve (100) according to one of the preceding claims, **characterized in that** the guide locking feature (142) or the cartridge locking feature (126') comprises
- a tangential stop portion (160) adapted to lock the locking movement (ML) by contacting the cartridge locking feature (126), and
- an axial holding portion (158) adapted to fill in an axial gap (162) of the cartridge locking feature (126) and to lock a movement of the valve guide element (140) in the direction of the valve axis (AV).

8. Hand brake valve (100) according to claim 7, **characterized in that** the axial holding portion (158) and/or the tangential stop portion (160) comprises a ramp section (164).

9. Hand brake valve (100) according to one of the preceding claims, **characterized in that** an outer valve guide diameter (206) of the valve guide element (140) is equal to or slightly smaller than an cartridge space diameter (208) of the valve cartridge (120), such that a clearance fit (FC) is established between the valve guide element (140) and the valve cartridge (120).

10. Hand brake valve (100) according to one of the preceding claims, **characterized in that** the valve guide element (140) further comprises at least one spacer protrusion (170) extending from the annular guide body (146) defining a guide core diameter (204).

11. Hand brake valve (100) according to one of the preceding claims, **characterized in that** the valve guide element (140) is comprised of a thermoplastic material (220), in particular polyamide (222) or glass-filled polyamide (224).

12. Pneumatic brake system (600) for a vehicle (1000), comprising
- a parking brake (700) and/or an auxiliary brake (702),
- at least one spring brake actuator (710), and
- a hand brake valve (100) according to one of claims 1 to 11.

13. Vehicle (1000), in particular a commercial vehicle (1002), comprising a pneumatic brake system (600) according to claim 12.

14. Method of assembling a hand brake valve (100) according to one of claims 1 to 11, comprising the steps:
- inserting a valve guide element (140) into a valve cartridge (120) in an insertion movement (MI),
- establishing of a positive locking (PL) in a locking movement (ML) between a guide locking feature (142) of the valve guide element (140) and a cartridge locking feature (126) of the valve cartridge (120),
- securing the positive locking (PL) through engaging a snap lock element (144) in a locked position (LOP) of the valve guide element (140).

15. Method according to claim 14, further comprising the steps:
- releasing of the securing of the positive locking (PL) through a disengaging movement (MD) of the snap lock element (144),
- releasing of the positive locking (PL) through a releasing movement (MRL) of the valve guide element (140) contrary to the locking movement (ML),
- extracting of the valve guide element (140) through an extracting movement (ME) of the valve guide element (140) contrary to the insertion movement (MI).

## Patentansprüche

1. Handbremsventil (100) zum Betätigen einer Feststellbremse (700) und/oder einer Hilfsbremse (702) eines Fahrzeugs (1000), insbesondere eines Nutzfahrzeugs (1002), umfassend:
- eine Ventilpatrone (120), umfassend eine Patronenverriegelungsfunktion (126), wobei die Ventilpatrone (120) angepasst ist, um eine Ventilkolbenanordnung (180) mit einem Ventilkolben (182) und einem Ventilsitzelement (136) aufzunehmen, wobei
- das Ventilsitzelement (136) in einer axialen Bewegung (MA) entlang einer Ventilachse (AV) gegen einen Ventilanschlag (124) der Ventilpatrone (120) bewegbar ist,
- ein Ventilführungselement (140) mit einem Führungskörper (146), der angepasst ist, um die axiale Bewegung (MA) des Ventilsitzelements (136) zu begrenzen, wobei
- das Ventilführungselement (140) mindestens eine Führungsverriegelungsfunktion (142) umfasst, die angepasst ist, um eine formschlüssige Verriegelung (PL) mit der Patronenverriegelungsfunktion (126) zu erzeugen, wobei
- die formschlüssige Verriegelung (PL) durch eine Verriegelungsbewegung (ML) des Ventilführungselements (140) in eine verriegelte Position (LOP) hergestellt wird, und **dadurch gekennzeichnet ist, dass**
- das Handbremsventil (100) mindestens ein Schnappverriegelungselement (144) umfasst, das angepasst ist, um das Ventilführungselement (140) in der verriegelten Position (LOP) zu sichern.

2. Handbremsventil (100) nach Anspruch 1, **dadurch gekennzeichnet, dass** das mindestens eine Schnappverschlusselement (144) Teil des Ventilführungselements (140) ist.

3. Handbremsventil (100) nach Anspruch 1 oder 2,
**dadurch gekennzeichnet, dass** das Schnappverriegelungselement (144) einen Schnappschenkel (152) und einen Schnapphaken (154) umfasst, wobei der Schnappschenkel (152) elastisch verformbar ist, insbesondere um eine Verschiebung des Schnapphakens (154) während der Verriegelungsbewegung (ML) zu ermöglichen.

4. Handbremsventil (100) nach einem der vorstehenden Ansprüche, **dadurch gekennzeichnet, dass**
- die Verriegelungsbewegung (ML) eine Drehbewegung (MR) um die Ventilachse (AV) herum ist.

5. Handbremsventil (100) nach einem der vorstehenden Ansprüche, **dadurch gekennzeichnet, dass** die Führungsverriegelungsfunktion (142) ein Vorsprung (148), insbesondere eine rechteckige Rippe (150) ist, der sich radial von dem ringförmigen Führungskörper (146) erstreckt.

6. Handbremsventil (100) nach einem der vorstehenden Ansprüche, **dadurch gekennzeichnet, dass** die Patronenverriegelungsfunktion (126) einen Patronenvorsprung (127) umfasst, der sich radial von einer inneren Patronenwand (128) in einen inneren Patronenraum (129) der Ventilpatrone (120) erstreckt.

7. Handbremsventil (100) nach einem der vorstehenden Ansprüche, **dadurch gekennzeichnet, dass** die Führungsverriegelungsfunktion (142) oder die Patronenverriegelungsfunktion (126) umfasst
- einen tangentialen Anschlagabschnitt (160), der angepasst ist, um die Verriegelungsbewegung (ML) durch Berühren der Patronenverriegelungsfunktion (126) zu verriegeln, und
- einen axialen Halteabschnitt (158), der angepasst ist, um einen axialen Spalt (162) der Patronenverriegelungsfunktion (126) zu füllen und eine Bewegung des Ventilführungselements (140) in die Richtung der Ventilachse (AV) zu verriegeln.

8. Handbremsventil (100) nach Anspruch 7, **dadurch gekennzeichnet, dass** der axiale Halteabschnitt (158) und/oder der tangentiale Anschlagabschnitt (160) einen Rampenabschnitt (164) umfasst.

9. Handbremsventil (100) nach einem der vorstehenden Ansprüche, **dadurch gekennzeichnet, dass** ein äußerer Ventilführungsdurchmesser (206) des Ventilführungselements (140) gleich oder geringfügig kleiner als ein Patronenraumdurchmesser (208) der Ventilpatrone (120) ist, derart, dass eine Spielpassung (FC) zwischen dem Ventilführungselement (140) und der Ventilpatrone (120) hergestellt wird.

10. Handbremsventil (100) nach einem der vorstehenden Ansprüche, **dadurch gekennzeichnet, dass** das Ventilführungselement (140) ferner mindestens einen Abstandsvorsprung (170) umfasst, der sich von dem ringförmigen Führungskörper (146) erstreckt und einen Führungskerndurchmesser (204) definiert.

11. Handbremsventil (100) nach einem der vorstehenden Ansprüche, **dadurch gekennzeichnet, dass** das Ventilführungselement (140) aus einem thermoplastischen Material (220), insbesondere Polyamid (222) oder glasgefülltem Polyamid (224), besteht.

12. Pneumatisches Bremssystem (600) für ein Fahrzeug (1000), umfassend
- eine Feststellbremse (700) und/oder eine Hilfsbremse (702),
- mindestens einen Federspeicherbremszylinder (710), und
- ein Handbremsventil (100) nach einem der Ansprüche 1 bis 11.

13. Fahrzeug (1000), insbesondere ein Nutzfahrzeug (1002), umfassend ein pneumatisches Bremssystem (600) nach Anspruch 12.

14. Verfahren zum Zusammenbauen eines Handbremsventils (100) nach einem der Ansprüche 1 bis 11, umfassend die Schritte:
- Einsetzen eines Ventilführungselements (140) in eine Ventilpatrone (120) in einer Einsteckbewegung (MI),
- Herstellen einer formschlüssigen Verriegelung (PL) in einer Verriegelungsbewegung (ML) zwischen einer Führungsverriegelungsfunktion (142) des Ventilführungselements (140) und einer Patronenverriegelungsfunktion (126) der Ventilpatrone (120),
- Sichern der formschlüssigen Verriegelung (PL) durch Einrasten eines Schnappverschlusselements (144) in einer verriegelten Position (LOP) des Ventilführungselements (140).

15. Verfahren nach Anspruch 14, ferner umfassend die Schritte:
- Lösen der Sicherung der formschlüssigen Verriegelung (PL) durch eine Ausrückbewegung (MD) des Schnappverschlusselements (144),
- Lösen der formschlüssigen Verriegelung (PL) durch eine Lösebewegung (MRL) des Ventilführungselementes (140) entgegengesetzt zu der Verriegelungsbewegung (ML),
- Herausziehen des Ventilführungselementes (140) durch eine Herausziehbewegung (ME) des Ventilführungselementes (140) entgegengesetzt zu der Einführbewegung (MI).

## Revendications

1. Valve de frein à main (100) permettant d'actionner un frein de stationnement (700) et/ou un frein auxiliaire (702) d'un véhicule (1000), en particulier d'un véhicule utilitaire (1002), comprenant :
- une cartouche de valve (120) comprenant un dispositif de verrouillage de cartouche (126), dans laquelle la cartouche de valve (120) est adaptée pour recevoir un arrangement de piston de valve (180) avec un piston de valve (182) et un élément de siège de valve (136), dans laquelle
- l'élément de siège de valve (136) est mobile suivant un mouvement axial (MA) le long d'un axe de valve (AV) contre une butée de valve (124) de la cartouche de valve (120),
- un élément guide-valve (140) avec un corps de guide (146), adapté pour limiter le mouvement axial (MA) de l'élément de siège de valve (136), dans laquelle
- l'élément guide-valve (140) comprend au moins un dispositif de verrouillage de guide (142), adapté pour créer un verrouillage positif (PL) avec le dispositif de verrouillage de cartouche (126), dans laquelle
- le verrouillage positif (PL) est établi par un mouvement de verrouillage (ML) de l'élément guide-valve (140) dans une position verrouillée (LOP), et **caractérisée en ce que,**
- la valve de frein à main (100) comprend au moins un élément de verrouillage à encliquetage (144) adapté pour fixer l'élément guide-valve (140) dans la position verrouillée (LOP).

2. Valve de frein à main (100) selon la revendication 1,
**caractérisée en ce que** l'au moins un élément de verrouillage à encliquetage (144) fait partie de l'élément guide-valve (140).

3. Valve de frein à main (100) selon la revendication 1 ou 2,
**caractérisée en ce que** l'élément de verrouillage à encliquetage (144) comprend une patte d'encliquetage (152) et un crochet d'encliquetage (154), dans laquelle la patte d'encliquetage (152) est déformable élastiquement, en particulier pour permettre un déplacement du crochet d'encliquetage (154) pendant le mouvement de verrouillage (ML).

4. Valve de frein à main (100) selon l'une des revendications précédentes, **caractérisée en ce que**
- le mouvement de verrouillage (ML) est un mouvement de rotation (MR) autour de l'axe de valve (AV).

5. Valve de frein à main (100) selon l'une des revendications précédentes, **caractérisée en ce que** le dispositif de verrouillage de guide (142) est une protubérance (148), en particulier une nervure rectangulaire (150), s'étendant radialement à partir du corps de guide annulaire (146).

6. Valve de frein à main (100) selon l'une des revendications précédentes, **caractérisée en ce que** le dispositif de verrouillage de cartouche (126) comprend une protubérance de cartouche (127) s'étendant radialement à partir d'une paroi intérieure de cartouche (128) dans un espace intérieur de cartouche (129) de la cartouche de valve (120).

7. Valve de frein à main (100) selon l'une des revendications précédentes, **caractérisée en ce que** le dispositif de verrouillage de guide (142) ou le dispositif de verrouillage de cartouche (126') comprend
- une partie de butée tangentielle (160) adaptée pour verrouiller le mouvement de verrouillage (ML) en venant en contact avec le dispositif de verrouillage de cartouche (126), et
- une partie de maintien axial (158) adaptée pour remplir un espace axial (162) du dispositif de verrouillage de cartouche (126) et pour verrouiller un mouvement de l'élément guide-valve (140) dans la direction de l'axe de valve (AV).

8. Valve de frein à main (100) selon la revendication 7,
**caractérisée en ce que** la partie de maintien axial (158) et/ou la partie de butée tangentielle (160) comprennent une section rampe (164).

9. Valve de frein à main (100) selon l'une des revendications précédentes, **caractérisée en ce qu'**un diamètre extérieur de guide-valve (206) de l'élément guide-valve (140) est égal ou légèrement inférieur à un diamètre d'espace de cartouche (208) de la cartouche de valve (120), de sorte qu'un ajustement de jeu (FC) est établi entre l'élément guide-valve (140) et la cartouche de valve (120).

10. Valve de frein à main (100) selon l'une des revendications précédentes, **caractérisée en ce que** l'élément de guide-valve (140) comprend en outre au moins une protubérance d'espacement (170) s'étendant à partir du corps de guide annulaire (146) définissant un diamètre de coeur de guide (204).

11. Valve de frein à main (100) selon l'une des revendications précédentes, **caractérisée en ce que** l'élément guide-valve (140) est constitué d'un matériau thermoplastique (220), en particulier de polyamide (222) ou de polyamide chargé de verre (224).

12. Système de freinage pneumatique (600) pour un véhicule (1000), comprenant
- un frein de stationnement (700) et/ou un frein auxiliaire (702),
- au moins un actionneur de frein à ressort (710), et
- une valve de frein à main (100) selon l'une des revendications 1 à 11.

13. Véhicule (1000), en particulier un véhicule utilitaire (1002), comprenant un système de freinage pneumatique (600) selon la revendication 12.

14. Procédé d'assemblage d'une valve de frein à main (100) selon l'une des revendications 1 à 11, comprenant les étapes :
- d'insertion d'un élément guide-valve (140) dans une cartouche de valve (120) lors d'un mouvement d'insertion (MI),
- d'établissement d'un verrouillage positif (PL) lors d'un mouvement de verrouillage (ML) entre un dispositif de verrouillage de guide (142) de l'élément guide-valve (140) et un dispositif de verrouillage de cartouche (126) de la cartouche de valve (120),
- de fixation du verrouillage positif (PL) par la mise en prise d'un élément de verrouillage à encliquetage (144) dans une position verrouillée (LOP) de l'élément guide-valve (140).

15. Procédé selon la revendication 14, comprenant en outre les étapes :
- de libération de la fixation du verrouillage positif (PL) par un mouvement de désolidarisation (MD) de l'élément de verrouillage à encliquetage (144),
- de libération du verrouillage positif (PL) par un mouvement de libération (MRL) de l'élément guide-valve (140) contraire au mouvement de verrouillage (ML),
- l'extraction de l'élément guide-valve (140) par un mouvement d'extraction (ME) de l'élément guide-valve (140) contraire au mouvement d'insertion (MI).
